# FASCICULE DE BREVET EUROPEEN

(11) **EP 2 363 845 B1**
(45) Date de publication et mention de la délivrance du brevet: **27.02.2013**
(21) Numéro de dépôt: 10155696.7
(22) Date de dépôt: 05.03.2010
(51) Int. Cl.: G08C 17/00, B60R 25/00, G07C 9/00, H02K 35/02

(54) **Commande à distance sans fil et auto-alimentée**
Autarke drahtlose Fernbedienung
Wireless, self-contained remote control

(43) Date de publication de la demande: 07.09.2011
(73) Titulaire: EM Microelectronic-Marin SA, 2074 Marin (CH)
(72) Inventeur: Koller, Philippe, 2000 Neuchâtel (CH); Meli, Marcel, CH-8700 Kuesnacht (CH); Gysel, Martin, CH-8400 Winterthur (CH); Würms, Martin, CH-8404 Winterthur (CH)
(74) Mandataire: Surmely, Gérard

(56) Documents cités:
- US-A- 4 412 355
- US-A- 5 844 516
- US-A1- 2009 121 905

## Description

La présente invention concerne le domaine des commandes à distance sans fil et auto-alimentées, c'est-à-dire électriquement autonomes. Par auto-alimenté ou électriquement autonome, on comprend un dispositif non relié au réseau et n'ayant pas de batterie à changer ou à recharger périodiquement par un utilisateur, mais ayant ses propres moyens de génération d'énergie électrique en transformant de l'énergie provenant de l'environnement ou de l'énergie produite par l'utilisateur, notamment lors de l'actionnement du dispositif. Les dispositifs alimentés par des cellules photovoltaïques entrent dans cette catégorie ; toutefois cette source d'énergie nécessite de la lumière, laquelle peut faire défaut.

Ainsi, on utilisera de préférence des convertisseurs d'énergie du type Peltier, en utilisant notamment la chaleur du corps de l'utilisateur, ou du type piézoélectrique en exploitant une pression exercée sur le dispositif pour générer momentanément une énergie électrique. Tout autre type de convertisseur d'énergie en énergie électrique peut être envisagé.

Comme l'énergie électrique à disposition pour faire fonctionner la commande à distance est limitée et généralement en faible quantité, on comprend qu'il est nécessaire de chercher des solutions consommant peu d'énergie électrique.

Les applications pour la commande à distance selon l'invention sont nombreuses, en particulier pour la commande d'installations audio et/ou vidéo, la commande de lampes ou encore de stores dans un bâtiment.

Plus particulièrement la présente invention concerne une commande à distance ayant en plus de la fonction d'interrupteur (ON-OFF) une fonction supplémentaire, notamment la sélection d'un dispositif parmi un ensemble de dispositifs similaires ou différents, ou encore la sélection d'un niveau de fonctionnement ou d'un mode parmi une pluralité de niveaux ou de modes possibles.

Le document US 5,844,516 décrit une commande à distance du genre susmentionné pour une application d'interrupteur à distance d'une lampe avec une fonction de variateur. Ce document décrit essentiellement trois modes de réalisation (figures 1, 3 et 7 ; figures 2 et 6 et figures 4 et 5).

Le premier dispositif comprend une génératrice mécano-électrique avec deux bobines déphasées, le rotor de cette génératrice étant entraîné, via un rouage de démultiplication, par un bouton-tournant actionné par un utilisateur. La génératrice associée à son mécanisme d'actionnement a deux fonctions. La première fonction est de fournir l'énergie nécessaire au circuit électronique et au transmetteur RF. La seconde fonction est de déterminer le sens de la commande pour le variateur et également la grandeur de la variation.

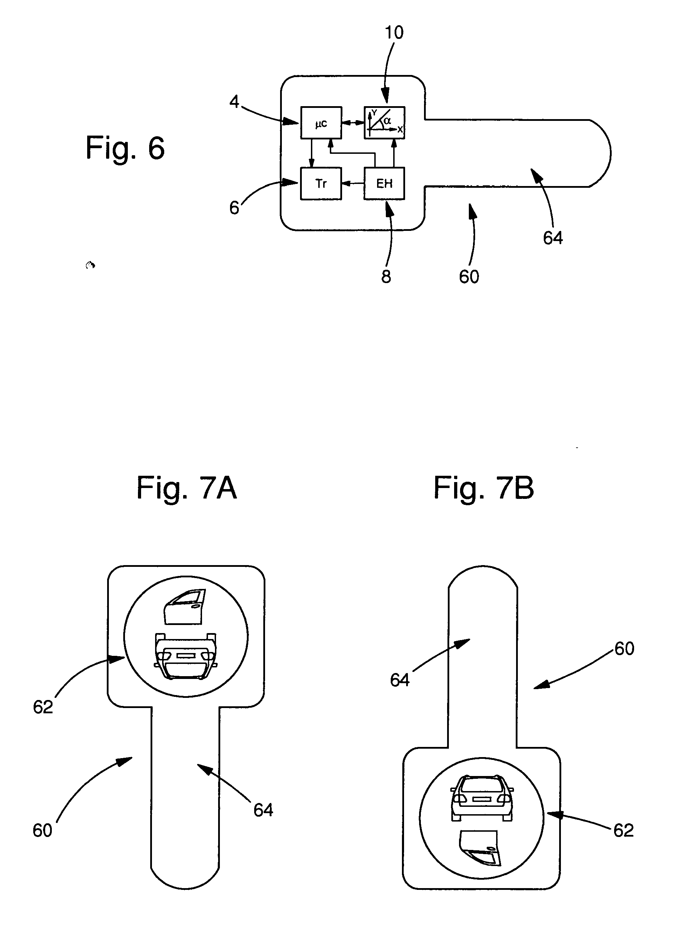

Ce premier dispositif présente plusieurs problèmes. Premièrement, la génération d'énergie et la détection du sens et de la grandeur de la variation d'intensité lumineuse souhaitée sont réalisées par le même mécanisme. Ceci n'est pas optimal car il faut d'abord tourner le bouton tournant pour obtenir une énergie suffisante au fonctionnement de la partie électronique. Seulement par la suite, en continuant de tourner le bouton, le dispositif peut commencer à détecter la fonction « variateur d'intensité lumineuse ». Ensuite, comme la grandeur de la variation est une fonction du nombre d'impulsions générées dans une bobine de la génératrice, le rouage représenté à la figure 7 est nécessaire pour permettre d'obtenir un nombre suffisant d'impulsions, correspondant au nombre de tours effectués par le rotor, par tour complet du bouton tournant. Ce mécanisme est encombrant, onéreux et il peut s'user relativement rapidement. On remarquera finalement que ce dispositif ne permet pas de conserver un certain niveau d'intensité lumineuse d'un enclenchement à l'autre, c'est-à-dire d'avoir une fonction d'interrupteur ON-OFF indépendante du niveau de luminosité sélectionné. En effet, pour éteindre la lampe, il est nécessaire de tourner le bouton de manière à diminuer l'intensité lumineuse jusqu'à zéro.

Le deuxième dispositif comprend plusieurs boutons à pression en lieu et place du bouton tournant du premier dispositif. Chaque bouton est associé à un propre rouage couplé à la génératrice, comme représenté à la figure 6 pour un bouton. On ne comprend pas comment plusieurs mécanismes du genre représenté à cette figure peuvent être couplés à une même génératrice sans un mécanisme additionnel complexe de débrayage. Quoiqu'il en soit, ce dispositif est très encombrant. Pour la fonction interrupteur ON-OFF, il faut deux boutons ; et pour avoir un niveau de luminosité prédéfini il faut un troisième bouton. La fonction de variateur autre que ce niveau prédéfini est difficilement concevable avec un tel dispositif peu fonctionnel.

Le troisième dispositif proposé est complexe et onéreux. Il comprend deux unités piézoélectriques et deux transmetteurs à des fréquences différentes. La lampe doit donc être équipée d'un récepteur à deux fréquences et d'un circuit logique d'analyse de l'ordre temporel des signaux reçus. Comme pour le premier dispositif, il n'est pas possible de conserver un niveau de luminosité présélectionné entre deux enclenchements successifs de la lampe car il faut toujours descendre progressivement la lumière jusqu'à zéro pour éteindre la lampe.

Un but de la présente invention est de fournir une commande à distance, notamment pour une lampe, qui pallie les inconvénients susmentionnés et qui permette une gestion optimale de l'énergie produite par le générateur d'énergie électrique interne.

A cet effet, la présente invention concerne une commande à distance sans fil et auto-alimentée d'au moins un dispositif et comprenant une unité électronique de commande et un circuit émetteur de signaux électromagnétiques associé à cette unité électronique de commande, cette commande à distance ayant une fonction de réglage d'un paramètre dudit au moins un dispositif ou/et une fonction de sélection d'un mode de fonctionnement dudit au moins un dispositif parmi une pluralité de modes de fonctionnement ou/et une fonction de sélection d'un dispositif ou d'un sous-ensemble de dispositifs parmi un ensemble de dispositifs. Cette commande à distance comprend un élément actionnable ou activable par un utilisateur et un convertisseur d'énergie associé à cet élément, ce convertisseur d'énergie étant agencé pour produire, en réponse à l'actionnement ou l'activation dudit élément par un utilisateur, une énergie électrique qui sert à alimenter momentanément ladite unité électronique de commande. Cette commande à distance est caractérisée en ce qu'elle comprend en outre un capteur de position angulaire permettant de déterminer la position angulaire de cette commande à distance ou d'une partie de celle-ci relativement à une direction de référence, ce capteur de position angulaire étant relié à ladite unité électronique et audit convertisseur d'énergie qui sert également à l'alimenter momentanément en réponse à l'actionnement ou l'activation dudit élément par un utilisateur, et en ce que, en plus de la production d'énergie électrique utile au fonctionnement de la commande à distance, un actionnement ou une activation dudit élément engendre, au moins une fois sur un nombre d'actionnements ou d'activations successifs donné dudit élément, une activation dudit capteur de position angulaire qui fournit alors à ladite unité électronique un signal relatif à ladite position angulaire de la commande à distance ou d'une partie de celle-ci, l'unité électronique fournissant ensuite au dispositif concerné ou au sous-ensemble de dispositifs concernés ou à l'ensemble des dispositifs, via ledit circuit émetteur, un signal de réglage ou/et de sélection correspondant à ladite position angulaire détectée par ledit capteur.

Dans un mode de réalisation préféré où la fonction de réglage d'un paramètre est implémentée, il est prévu en outre une fonction de commutation pour commuter le dispositif ou les dispositifs en fonction entre un état actif et un état inactif ou de veille ou de référence.

Dans une variante particulière, un premier actionnement ou une première activation dudit élément sur deux sert conjointement à l'activation dudit dispositif ou dudit sous-ensemble de dispositifs ou dudit ensemble de dispositifs et à ladite fonction de réglage de ce dispositif ou de ce sous-ensemble de dispositifs ou de cet ensemble de dispositifs alors que le second actionnement ou la seconde activation sert à ladite fonction de commutation vers ledit état inactif ou de veille ou de référence.

D'autres modes de réalisation et variantes font l'objet de revendications jointes à la présente description de l'invention.

Grâce aux caractéristiques de l'invention, la commande à distance est efficace, peu encombrante et relativement peu onéreuse. Le capteur de position est de préférence un accéléromètre utilisé pour des mesures statiques relatives à l'accélération terrestre (pesanteur) et réalisé sous la forme d'un MEMS (Micro-Electro-Mechanical System). De tels accéléromètres sont de très petites tailles et peuvent être fonctionnels avec une très faible quantité d'énergie électrique. On peut donc aisément les incorporer par exemple dans un bouton-poussoir tournant. Ils peuvent simplement être montés sur un petit support (PCB) sur lequel est aussi agencé l'unité électronique de commande. Ensuite, le capteur de position angulaire selon l'invention permet de fournir une indication sur la position angulaire de la commande à distance ou d'une partie de celle-ci pour régler un paramètre ou effectuer une sélection de manière indépendante de l'actionnement ou de l'activation de l'élément servant à fournir une énergie au convertisseur d'énergie et à activer la fonction de réglage ou de sélection. Ceci représente un avantage important relativement à l'art antérieur discuté précédemment. Ainsi, il est possible de faire fonctionner la commande à distance auto-alimentée avec sensiblement une même quantité d'énergie électrique produite par le convertisseur quel que soit le réglage ou la sélection voulue. De plus, le système peut être optimisé de manière qu'une petite quantité d'énergie électrique, produite par un convertisseur de petites dimensions facilement incorporé dans la commande à distance, suffise à alimenter momentanément l'unité électronique de commande, le capteur et le circuit émetteur pour permettre à l'unité électronique de recevoir un signal de position du capteur et d'envoyer ensuite un signal radiofréquence (RF) à un ou plusieurs dispositif(s). Il a été démontré dans le cadre du développement de l'objet de la présente invention qu'une simple pression sur un bouton poussoir associé à une unité piézo-électrique ou la seule chaleur d'un doigt appliquée durant une courte période sur un capteur du type Peltier est suffisante pour activer l'ensemble des circuits électroniques de la commande à distance selon l'invention durant un intervalle de temps suffisant pour permettre au capteur de donner un signal de sa position angulaire (selon deux ou trois axes) à l'unité électronique et à cette dernière de traiter l'information reçue pour ensuite activer le circuit émetteur et envoyer un signal de commande. On notera que, dans une variante, l'unité électronique de commande peut être reliée à un transpondeur du type passif dans lequel est agencé le circuit émetteur, lequel est alors alimenté par un signal RF provenant du dispositif qui fournit alors un champ d'interrogation continu ou périodique.

Divers modes de réalisation et variantes de l'invention seront décrits ci-après à l'aide des figures annexées, données à titre d'exemples nullement limitatifs, dans lesquelles :
- La figure 1A représente schématiquement les circuits et unités électroniques d'un premier mode de réalisation de l'invention ;
- La figure 1B est une coupe schématique du dispositif de la figure 1 ;
- La figure 2 est une vue schématique de dessus d'une variante du premier mode de réalisation ;
- La figure 3 est une vue schématique de dessus d'un deuxième mode de réalisation de l'invention ;
- La figure 4 est une vue schématique de dessus d'un troisième mode de réalisation de l'invention implémenté dans une commande à distance pour une installation audio.
- La figure 5 est une vue schématique de dessus d'un quatrième mode de réalisation de l'invention ;
- La figure 6 représente une variante du premier mode de réalisation implémentée dans une clé électronique pour voiture ; et
- Les figures 7A et 7B montrent la clé électronique de la figure 6 respectivement dans deux positions correspondant à deux sélections différentes de dispositifs de verrouillage.

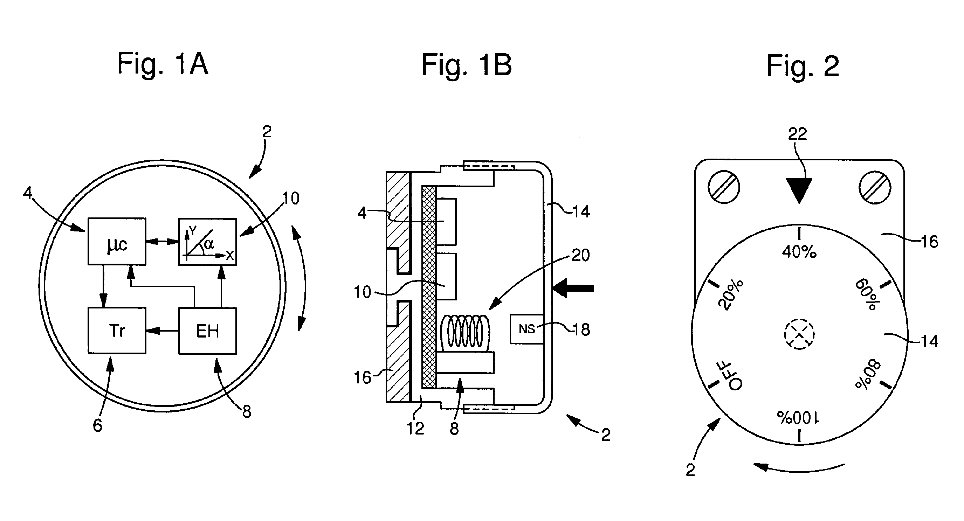

Les figures 1A et 1B montrent un premier mode de réalisation de l'invention. La commande à distance 2 comprend de manière classique une unité électronique de commande 4 et un circuit émetteur de signaux électromagnétiques 6 (infrarouge ou RF notamment). Selon l'invention, elle comprend en outre un convertisseur d'énergie 8, associé à un bouton-poussoir 14 pour produire lors de l'actionnement de celui-ci par un utilisateur une énergie électrique servant à alimenter momentanément la commande à distance, et un capteur de position angulaire 10 permettant de déterminer la position angulaire du bouton-poussoir, dans un plan X-Y parallèle au plan général d'un support 16 sur lequel le bouton-poussoir est monté tournant, lorsqu'il est alimenté. Le capteur 10 est solidaire en rotation de l'élément 14 actionnable par l'utilisateur de sorte que ce capteur détecte la position angulaire de cet élément 14 dans un plan X-Y parallèle au support 16. Dans le cas où le capteur est formé par un accéléromètre utilisé en mode statique, le plan X-Y est un plan vertical. Dans un autre cas où le capteur est sensible au champ magnétique terrestre, le plan X-Y est un plan sensiblement horizontal.

Ainsi, le bouton-poussoir tournant 14 cumule deux fonctions, à savoir premièrement une fonction de production d'énergie électrique, en association avec le convertisseur d'énergie auquel il fournit une énergie mécanique lorsqu'un utilisateur presse sur cet élément 14, et deuxièmement une fonction de variation de la position angulaire du capteur 10 dans le plan X-Y relativement à une direction de référence. Le convertisseur 8 définit un collecteur d'énergie (en anglais Energy Harvester). Il est relié aux circuits/unités électroniques 4, 6 et 8 qu'il alimente momentanément lorsque le bouton-poussoir est actionné. Ce convertisseur 8 peut être notamment du type piézoélectrique ou, comme représenté schématiquement à la figure 1B, du type magnéto-électrique. Il comprend alors un aimant permanent 18 et une bobine 20 fixés respectivement à l'élément mobile 14 et à un socle 12 solidaire en rotation de l'élément 14 et monté tournant dans le support 16. On remarquera que la représentation du convertisseur d'énergie est un exemple conceptuel nullement limitatif. L'homme du métier sait fabriquer des convertisseurs magnéto-électriques performants.

L'unité électronique de commande 4 (par exemple un microcontrôleur) est reliée au circuit émetteur 6 (Tr) pour lui fournir au moins un signal électrique de commande contenant une donnée relative à la position angulaire de l'élément 14 lorsque ce dernier est actionné. Dans cette variante, ce circuit émetteur envoie un signal de commande électromagnétique, correspondant au signal de commande électrique, en utilisant l'énergie fournie par le convertisseur 8.

Le capteur de position angulaire 10 est relié à l'unité électronique 4, à laquelle il fournit un signal de mesure angulaire relative à la position angulaire de l'élément 14, respectivement d'un référentiel lié au capteur relativement à une direction de référence (par exemple verticale).

Selon l'invention, en plus de la production d'énergie utile au fonctionnement de la commande à distance, un actionnement de l'élément 14 engendre, au moins une fois sur un nombre d'actionnements donné selon le mode d'utilisation de cette commande à distance, une activation du capteur de position angulaire qui fournit alors ledit signal de mesure angulaire à l'unité électronique 4 également alimentée par le convertisseur.

Ensuite, cette unité électronique commande le circuit émetteur 6 pour qu'il transmette un signal de commande relatif à ladite mesure angulaire effectuée par le capteur 10 à un dispositif ou à une pluralité de dispositifs. Ce signal de commande est soit un signal de réglage, soit un signal de sélection. De manière générale, selon l'invention, la commande à distance a une fonction de réglage d'un paramètre d'au moins un dispositif ou/et une fonction de sélection d'un mode de fonctionnement d'au moins un dispositif parmi une pluralité de modes de fonctionnement ou/et une fonction de sélection d'un dispositif ou d'un sous-ensemble de dispositifs parmi un ensemble de dispositifs. Cette fonction de réglage à plusieurs niveaux ou de sélection est réalisée via le capteur de position angulaire qui est agencé pour pouvoir fournir plusieurs signaux de mesure différents correspondant respectivement à divers niveaux de réglage et/ou à diverses sélections. Plusieurs variantes seront décrites par la suite.

A la figure 2 est représentée schématiquement une variante de réalisation du premier mode de réalisation. Le support 16 est fixé ou agencé verticalement contre une paroi ou un mur. Il présente une marque 22 à la verticale de l'axe de rotation de l'élément 14 (passant par le centre de la croix centrale dessinée sur l'élément 14 pour indiquer qu'il s'agit d'un bouton-poussoir). Sur cet élément 14 est prévue une graduation correspondant à divers niveaux de réglage d'un paramètre d'un dispositif déterminé, en particulier de la luminosité d'une lampe commandée à distance. Dans cette variante, une des positions de la graduation correspond à une position « OFF », c'est-à-dire à une extinction de la lumière. En plus, le dispositif d'alimentation de la lampe peut être mis en mode veille lorsqu'un utilisateur presse sur l'élément 14 alors que l'indication « OFF » est située en regard de la marque 22. Cette variante se comporte comme un variateur de lumière à curseur ou à bouton tournant classique. On notera que le capteur prévu ici est un accéléromètre microélectronique qui permet des mesures d'angle précises. Ainsi, on peut dans une première variante prévoir un nombre limité N de niveau de réglage (N=6 dans le présent exemple incluant le niveau zéro) et associer une plage angulaire de 360°/N pour chaque niveau de réglage prévu. Dans une deuxième variante, la graduation appliquée sur l'élément 14 est indicative, mais le réglage est prévu plus fin et à la limite continu ou quasi continue. Ce mode de réalisation présente toutefois un problème pour l'utilisateur car il doit effectuer une rotation de l'élément 14 chaque fois qu'il allume ou éteint la lumière.

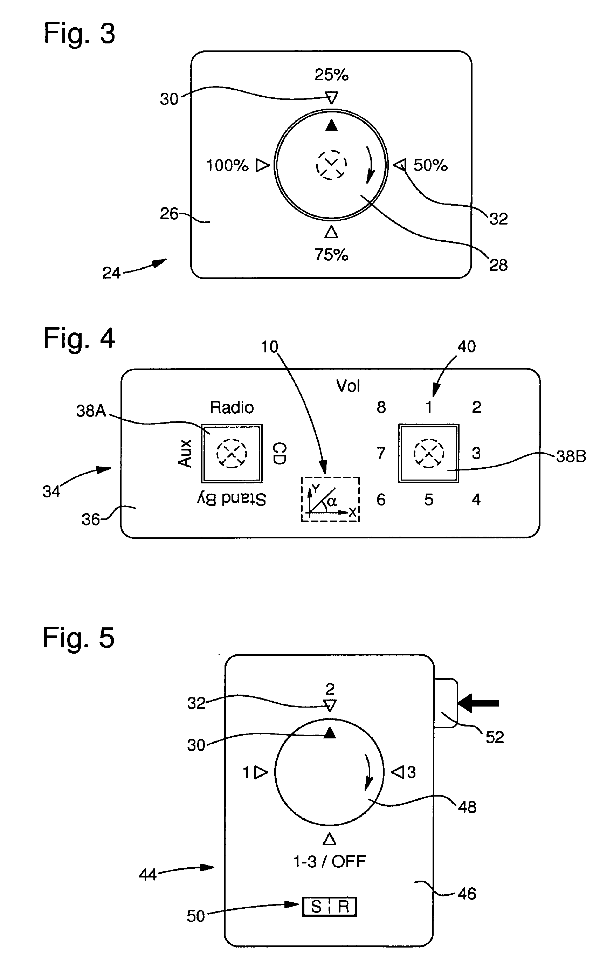

Le deuxième mode de réalisation représenté à la figure 3 résout ce problème. La commande à distance 24 comprend un boîtier 26 à la surface supérieure duquel est agencé un bouton-poussoir tournant 28. Le capteur de position angulaire est solidaire en rotation de cet élément 28. Le boîtier présente une graduation 32 (dans l'exemple représenté quatre repères) correspondant à divers niveaux de réglage d'un ou plusieurs dispositif(s) donné(s) dans un état actif. Le terme actif doit être compris de manière large et générale. Ainsi pour une lampe, un état actif correspond à une émission de lumière. Pour un store à lamelles, l'état actif correspond par exemple au store descendu avec les lames présentant une orientation quelconque, laquelle est réglée par le dispositif de commande 24. Dans ce dernier cas, l'état inactif correspond au store monté.

Selon l'invention, la commande à distance 24 comprend en outre une fonction de commutation pour commuter le dispositif ou un sous-ensemble de dispositifs ou un ensemble de dispositifs associé(s) à cette commande à distance entre un état actif et un état inactif ou de veille ou de référence (autre que les niveaux du paramètre réglé par la graduation 32). Selon une variante préférée, un premier actionnement ou une première activation dudit élément sur deux sert conjointement à l'activation dudit dispositif ou dudit sous-ensemble de dispositifs ou dudit ensemble de dispositifs et à ladite fonction de réglage de ce dispositif ou de ce sous-ensemble de dispositifs ou de cet ensemble de dispositifs, alors que le second actionnement ou la seconde activation sert à ladite fonction de commutation vers ledit état inactif ou de veille ou de référence.

La figure 4 montre un troisième mode de réalisation d'une commande à distance 34 associée à une installation audio. Elle est formée d'un boîtier 36 à la surface duquel sont agencés deux boutons-poussoir 38A et 38B. Chacun de ces boutons-poussoir est associé à un convertisseur d'énergie pour produire l'énergie électrique nécessaire à la fonction de réglage, respectivement à la fonction de sélection au moyen du capteur de position angulaire. Le bouton 38A permet de sélectionner une unité de l'installation ou de mettre celle-ci en mode de veille (« StandBy »). Le bouton 38B permet de régler le volume sonore émis par les haut-parleurs de l'installation audio. On remarquera que la commande à distance 34 est portable et qu'un utilisateur la tient dans une main. Le capteur 10 est solidaire du boîtier 36. Ainsi, par convention, la sélection opérée par un actionnement du bouton 38A permet de sélectionner l'unité indiquée qui est orientée vers le haut ou le mode veille lorsque la commande 34 est orientée de manière que l'indication « StandBy » soit en haut. Il en va de même pour sélectionner un niveau sonore parmi les 8 niveaux indiqués. L'unité électronique interne envoie via un circuit émetteur un signal de sélection ou un signal de réglage de manière similaire aux modes de réalisation décrits précédemment. L'énergie utile à la mesure angulaire et à l'envoi du signal de commande est fournie par l'utilisateur actionnant un des boutons-poussoir 38A ou 38B.

On notera que dans une variante, les boutons-poussoir peuvent être remplacés par des capteurs, en particulier du type Peltier. Ces capteurs servent alors à produire l'énergie électrique utile lorsqu'ils sont activés par le doigt d'un utilisateur.

Dans une variante de réalisation non représentée aux figures, le bouton-poussoir 38A est remplacé par un simple bouton tournant ayant une fonction de commutateur pour le circuit électronique interne. Ce bouton n'est alors associé ni au convertisseur d'énergie ni au capteur de position angulaire. A l'aide de ce bouton, on sélectionne une unité de l'installation audio et le commutateur associé met le circuit électronique interne dans une configuration qui lui permet de savoir quelle unité à été sélectionnée lorsque l'utilisateur presse ensuite sur le bouton-poussoir 38B pour régler le volume (Vol). Ainsi, l'actionnement du poussoir 38B sert conjointement à activer l'unité présélectionnée et à régler le volume à un niveau sonore correspondant au niveau indiqué en haut lors de l'actionnement de l'élément 38B.

La figure 5 montre un quatrième mode de réalisation d'une commande à distance 44 pouvant notamment s'appliquer à la commande de stores ou d'autres moyens de protection solaire, par exemple des toiles. Cette commande 44 est portable et le capteur de position angulaire est, comme dans le mode de réalisation précédent, solidaire du boîtier 46. Elle comprend un bouton tournant 48, un commutateur 50 et un bouton-poussoir 52 agencé à une face latérale du boîtier. Le bouton 48 présente un index 30 et une graduation ou un affichage à la périphérie de ce bouton 48. Cet affichage présente quatre repères 32 correspondant à quatre positions « 1 », « 2 », « 3 » et « 1-3/OFF » en regard desquelles un utilisateur peut amener par rotation l'index 30 du bouton 48. Le capteur de position angulaire est associé au bouton tournant 48 alors que le convertisseur d'énergie est associé au bouton-poussoir 52. Le capteur peut donner une mesure angulaire relativement à un axe de préférence vertical (direction de l'accélération terrestre). Dans ce cas-ci on orientera la commande verticalement (repère 2 en haut) avant de presser sur le bouton 52. Dans une variante, le capteur de position peut être formé par des moyens de détection actifs ou passifs de la position du bouton 48 relativement à un axe de référence propre au boîtier 46. Si le capteur est actif, l'énergie nécessaire à son fonctionnement est fournie par le convertisseur d'énergie. Si il est passif (par exemple contacts électriques commutés mécaniquement lors de la rotation du bouton 48), le circuit logique interne est agencé pour déterminer quel repère 32 se trouve en regard de l'index 30 lorsqu'il est momentanément alimenté par un actionnement du bouton-poussoir 52.

Le quatrième mode se caractérise en particulier par le fait que la commande 44 a une fonction de sélection d'un mode de fonctionnement dudit au moins un dispositif parmi une pluralité de modes de fonctionnement ou une fonction de sélection d'un dispositif ou d'un sous-ensemble de dispositifs parmi un ensemble de dispositifs et également une fonction de réglage d'un paramètre dudit au moins un dispositif. Elle comprend en outre un commutateur actionnable ou activable par l'utilisateur pour présélectionner ladite fonction de sélection ou ladite fonction de réglage lors de l'actionnement ou de l'activation de l'élément 52.

Le commutateur 50 est par exemple du type à bascule permettant de commuter entre une position de sélection « S » et une position de réglage « R ».

Ce quatrième mode de réalisation présente l'avantage d'activer alternativement une fonction de sélection et une fonction de réglage au moyen d'un seul bouton tournant 48 associé à un seul capteur de position. Dans l'application relative aux stores, la commande 44 peut, lorsque le commutateur est basculé sur la position « S », sélectionner soit un quelconque store parmi trois stores, soit les trois stores. En appuyant une première fois sur le bouton 52, le ou les stores sélectionnés descendent. Ensuite, l'utilisateur commute le commutateur 50 sur la position « R » et le même bouton 48 sert alors à régler l'inclinaison finale des lames de store ou dans la position « OFF » à stopper la descente des stores actionnés. Il presse à nouveau sur le bouton 52 pour produire l'énergie électrique nécessaire à l'envoi d'un deuxième signal de commande aux mécanismes d'actionnement des stores concernés afin d'effectuer le réglage de l'orientation des lames dans trois positions prédéterminées respectivement pour les trois repères « 1 », « 2 » et « 3 ». Dans la position « OFF » un premier actionnement de l'élément 52 engendre l'arrêt de la descente du ou des stores et un deuxième actionnement ultérieur de cet élément 52 engendre une remontée de ce ou ces store(s). L'homme du métier peut concevoir d'autres variantes. Le réglage peut dans le cas de stores en toile ou tissu être relatif à l'inclinaison finale de la toile ou d'une partie terminale de celle-ci.

On notera que la commande 34 ou 44 peut également s'appliquer à une commande à distance d'un ensemble de lampes ou de moyens de production de lumière. On peut ainsi sélectionner par exemple chaque lampe ou des sous-ensembles de lampes parmi un ensemble de lampes donné. L'intensité lumineuse (luminosité) des lampes actives ou activées peut être réglée par la commande selon l'invention.

La commande à distance 60 représentée aux figures 6, 7A et 7B constitue une clé électronique pour l'ouverture et la fermeture sélectives de dispositifs de verrouillage des portes d'une voiture. Les circuits et unités électroniques 4, 6, 8 et 10 sont similaires à celles déjà décrites à l'aide de la figure 1A.

En orientant la clé électronique avec son axe longitudinal à la verticale, on peut fermer et ouvrir soit les portes latérales, soit la porte arrière (porte du coffre) selon que la partie terminale 64 est située en bas ou en haut lors de l'actionnement du bouton-poussoir 62 associé au convertisseur d'énergie 8. Cet exemple est nullement limitatif et d'autres sélections peuvent être envisagées pour d'autres orientations de la clé 60.

## Revendications

1. Commande à distance (2 ; 24 ; 34 ; 44 ; 60) sans fil et auto-alimentée d'au moins un dispositif et comprenant une unité électronique de commande (4) et un circuit émetteur de signaux électromagnétiques (6) associé à cette unité électronique de commande, cette commande à distance ayant une fonction de réglage d'un paramètre dudit au moins un dispositif ou/et une fonction de sélection d'un mode de fonctionnement dudit au moins un dispositif parmi une pluralité de modes de fonctionnement ou/et une fonction de sélection d'un dispositif ou d'un sous-ensemble de dispositifs parmi un ensemble de dispositifs, cette commande à distance comprenant un élément (14 ; 28 ; 38A, 38B; 52 ; 62) actionnable ou activable par un utilisateur et un convertisseur d'énergie (8) associé à cet élément, ce convertisseur d'énergie étant agencé pour produire, en réponse à l'actionnement ou l'activation dudit élément par un utilisateur, une énergie électrique qui sert à alimenter momentanément ladite unité électronique de commande, cette commande à distance étant **caractérisée en ce qu'**elle comprend en outre un capteur de position angulaire (10) permettant de déterminer la position angulaire de cette commande à distance ou d'une partie de celle-ci relativement à une direction de référence, ce capteur de position angulaire étant relié à ladite unité électronique et audit convertisseur d'énergie qui sert également à l'alimenter momentanément en réponse à l'actionnement ou l'activation dudit élément par un utilisateur, et **en ce que**, en plus de la production d'énergie électrique utile au fonctionnement de la commande à distance, un actionnement ou une activation dudit élément engendre, au moins une fois sur un nombre d'actionnements ou d'activations successifs donné dudit élément, une activation dudit capteur de position angulaire qui fournit alors à ladite unité électronique un signal relatif à ladite position angulaire de la commande à distance ou d'une partie de celle-ci, l'unité électronique (4) fournissant ensuite au dispositif concerné ou au sous-ensemble de dispositifs concernés ou à l'ensemble des dispositifs, via ledit circuit émetteur, un signal de réglage ou/et de sélection correspondant à ladite position angulaire détectée par ledit capteur.

2. Commande à distance selon la revendication 1, **caractérisée en ce que** ledit élément (14 ; 28) est monté tournant relativement à une structure (16 ; 26) de la commande à distance, et **en ce que** ledit capteur de position angulaire est solidaire en rotation dudit élément, ce dernier servant d'une part à produire momentanément ladite énergie électrique et d'autre part à varier la position angulaire dudit capteur relativement à ladite structure pour définir le réglage ou la sélection voulue par l'utilisateur.

3. Commande à distance (24 ; 34) selon la revendication 1 ou 2, **caractérisée en ce qu'**elle a ladite fonction de réglage d'un paramètre et en outre une fonction de commutation pour commuter ledit dispositif ou ledit sous-ensemble de dispositifs ou ledit ensemble de dispositifs entre un état actif et un état inactif ou de veille ou de référence.

4. Commande à distance (24) selon la revendication 3, **caractérisée en ce qu'**un premier actionnement ou une première activation dudit élément (28) sur deux sert conjointement à l'activation dudit dispositif ou dudit sous-ensemble de dispositifs ou dudit ensemble de dispositifs et à ladite fonction de réglage de ce dispositif ou de ce sous-ensemble de dispositifs ou de cet ensemble de dispositifs alors que le second actionnement ou la seconde activation sert à ladite fonction de commutation vers ledit état inactif ou de veille ou de référence.

5. Commande à distance (44) selon l'une des revendications précédentes, **caractérisée en ce qu'**elle a ladite fonction de sélection d'un mode de fonctionnement dudit au moins un dispositif parmi une pluralité de modes de fonctionnement ou ladite fonction de sélection d'un dispositif ou d'un sous-ensemble de dispositifs parmi un ensemble de dispositifs et également ladite fonction de réglage d'un paramètre dudit au moins un dispositif, et **en ce qu'**elle comprend en outre un commutateur (50) actionnable ou activable par l'utilisateur pour présélectionner ladite fonction de sélection ou ladite fonction de réglage lors de l'actionnement ou de l'activation dudit élément (52).

6. Commande à distance selon l'une des revendications précédentes, **caractérisée en ce que** ledit dispositif, respectivement lesdits dispositifs est/sont une lampe ou un moyen de production de lumière, respectivement des lampes ou des moyens de production de lumière, et **en ce qu'**au moins la fonction de réglage est implémentée et ledit paramètre réglé est l'intensité lumineuse émise.

7. Commande à distance selon l'une des revendications précédentes, **caractérisée en ce que** ledit dispositif, respectivement lesdits dispositifs est/sont un store ou un moyen de protection solaire, respectivement des stores ou des moyens de protection solaire, et **en ce qu'**au moins la fonction de réglage est implémentée et ledit paramètre réglé est l'inclinaison de lames formant le ou les store(s) ou l'inclinaison d'une toile ou d'une partie terminale de celle-ci.

8. Commande à distance (60) selon l'une des revendications précédentes, **caractérisée en ce que** ledit dispositif ou lesdits dispositifs est/sont respectivement un dispositif ou des dispositifs de verrouillage de portes de voiture, et **en ce que** ladite fonction de sélection d'un dispositif ou d'un sous-ensemble de dispositifs parmi l'ensemble des dispositifs de verrouillage associés respectivement aux portes de la voiture est implémentée.

## Claims

1. Wireless and self-energised remote control (2; 24; 34; 44; 60) of at least one device comprising an electronic control unit (4) and a transmitter circuit for emitting electromagnetic signals (6) linked to this electronic control unit, and this remote control has a function of adjusting a parameter of said at least one device and/or a function of selecting a mode of operation of said at least one device from a plurality of modes of operation and/or a function of selecting a device or a subassembly of devices from an assembly of devices, and this remote control comprises an element (14; 28; 38A; 38B; 52; 62) that can be operated or activated by a user and an energy converter (8) linked to this element, wherein this energy converter is arranged to produce, in response to the operation or activation of said element by a user, an electric energy that serves to momentarily supply said electronic control unit, and this remote control is **characterised in that** it additionally comprises an angular position sensor (10), which enables the angular position of this remote control or a part thereof to be determined in relation to a reference direction, wherein this angular position sensor is connected to said electronic unit and to said energy converter, which also serves to momentarily supply it in response to the operation or activation of said element by a user, and that in addition to the production of electric energy suitable for operation of the remote control, an operation or an activation of said element causes, at least once over a given number of successive operations or activations of said element, an operation of said angular position sensor, which then supplies to said electronic unit a signal relating to said angular position of the remote control or a part thereof, wherein the electronic unit (4) then supplies via said transmitter circuit an adjustment and/or selection signal corresponding to said angular position detected by said sensor to the device concerned or to the subassembly of devices concerned or to the assembly of the devices.

2. Remote control according to claim 1, **characterised in that** said element (14; 28) is mounted to be rotatable relative to a structure (16; 26) of the remote control, and that said angular position sensor is rotationally fixed with said element, wherein the latter serves, on one hand, to momentarily produce said electric energy and, on the other hand, to vary the angular position of said sensor in relation to said structure to define the adjustment or selection required by the user.

3. Remote control (24; 34) according to claim 1 or 2, **characterised in that** it has said function of adjusting a parameter and additionally a function of switching said device or said subassembly of devices or said assembly of devices between an active state and an inactive state or in sleep mode or reference mode.

4. Remote control (24) according to claim 3, **characterised in that** a first operation or a first activation of said element (28) of two jointly serves for activation of said device or said subassembly of devices or said assembly of devices and for said function of adjusting this device or this subassembly of devices or this assembly of devices, whereas the second operation or the second activation serves for said function of switching to said inactive state or sleep mode or reference mode.

5. Remote control (44) according to one of the preceding claims, **characterised in that** it has said function of selecting a mode of operation of said at least one device from a plurality of modes of operation or said function of selecting a device or a subassembly of devices from an assembly of devices and also said function of adjusting a parameter of said at least one device, and that it additionally comprises a switch (50), which can be operated or activated by the user to preselect said selection function or said adjustment function during the operation or activation of said element (52).

6. Remote control according to one of the preceding claims, **characterised in that** said device or said devices is/are a lamp or a means for producing light or lamps or means for producing light respectively, and that at least the adjustment function is implemented and said adjusted parameter is the emitted light intensity.

7. Remote control according to one of the preceding claims, **characterised in that** said device or said devices is/are a blind or a sun protection means or blinds or sun protection means respectively, and that at least the adjustment function is implemented and said adjusted parameter is the inclination of the slats forming the blind or blinds or the inclination of a sheet or of an end part thereof.

8. Remote control (60) according to one of the preceding claims, **characterised in that** said device or said devices is/are a device or devices for locking car doors respectively, and that said function of selecting a device or a subassembly of devices from the assembly of locking devices associated respectively with the doors of the car is implemented.

## Patentansprüche

1. Drahtlose und selbstversorgende Fernsteuerung (2; 24; 34; 44; 60) für wenigstens eine Vorrichtung, mit einer elektronischen Steuereinheit (4) und einer Schaltung zum Senden elektromagnetischer Signale (6), die dieser elektronischen Steuereinheit zugeordnet ist, wobei diese Fernsteuerung eine Funktion zum Regulieren eines Parameters der wenigstens einen Vorrichtung und/oder eine Funktion für die Auswahl einer Betriebsart der wenigstens einen Vorrichtung unter mehreren Betriebsarten und/oder eine Funktion für die Auswahl einer Vorrichtung oder einer Untermenge von Vorrichtungen unter einer Menge von Vorrichtungen umfasst, wobei diese Fernsteuerung ein Element (14; 28; 38A, 38B; 52; 62), das durch einen Anwender betätigbar oder aktivierbar ist, und einen Energiewandler (8), der diesem Element zugeordnet ist, umfasst, wobei dieser Energiewandler dafür ausgelegt ist, als Antwort auf die Betätigung oder die Aktivierung des Elements durch einen Anwender elektrische Energie zu erzeugen, die dazu dient, die elektronische Steuereinheit momentan zu versorgen, wobei diese Fernsteuerung **dadurch gekennzeichnet ist, dass** sie außerdem einen Winkelpositionssensor (10) umfasst, der ermöglicht, die Winkelposition dieser Fernsteuerung oder eines Teils von ihr in Bezug auf eine Referenzrichtung zu bestimmen, wobei dieser Winkelpositionssensor mit der elektronischen Einheit und mit dem Energiewandler verbunden ist, der außerdem dazu dient, als Antwort auf die Betätigung oder die Aktivierung des Elements durch einen Anwender diesen zu versorgen, und dass zusätzlich zu der Erzeugung elektrischer Nutzenergie für die Funktion der Fernsteuerung eine Betätigung oder eine Aktivierung des Elements wenigstens einmal bei einer gegebenen Anzahl aufeinander folgender Betätigungen oder Aktivierungen des Elements eine Aktivierung des Winkelpositionssensors erzeugt, der dann an die elektronische Einheit ein Signal bezüglich der Winkelposition der Fernsteuerung oder eines Teils von ihr liefert, wobei die elektronische Einheit (4) anschließend an die betreffende Vorrichtung oder an eine Untermenge betreffender Vorrichtungen oder an die Menge der Vorrichtungen über die Sendeschaltung ein Signal für die Regulierung und/oder Auswahl, das der durch den Sensor detektierten Winkelposition entspricht, liefert.

2. Fernsteuerung nach Anspruch 1, **dadurch gekennzeichnet, dass** das Element (14; 28) drehbar in Bezug auf eine Struktur (16, 26) der Fernsteuerung montiert ist und dass der Winkelpositionssensor mit dem Element drehfest verbunden ist, wobei dieses Letztere einerseits dazu dient, momentan elektrische Energie zu erzeugen, und andererseits die Winkelposition des Sensors in Bezug auf die Struktur zu verändern, um die von dem Anwender gewünschte Regulierung oder Auswahl zu definieren.

3. Fernsteuerung (24; 34) nach Anspruch 1 oder 2, **dadurch gekennzeichnet, dass** sie die Funktion der Regulierung eines Parameters und außerdem eine Umschaltfunktion besitzt, um die Vorrichtung oder die Untermenge von Vorrichtungen oder die Menge von Vorrichtungen zwischen einem aktiven Zustand und einem inaktiven Zustand oder Ruhezustand oder Referenzzustand umzuschalten.

4. Fernsteuerung (24) nach Anspruch 3, **dadurch gekennzeichnet, dass** eine erste Betätigung oder eine erste Aktivierung des Elements (28) von zwei Betätigungen bzw. Aktivierungen sowohl der Aktivierung der Vorrichtung oder der Untermenge von Vorrichtungen oder der Menge von Vorrichtungen als auch der Funktion zum Regulieren dieser Vorrichtung oder dieser Untermenge von Vorrichtungen oder dieser Menge von Vorrichtungen dient, während die zweite Betätigung oder die zweite Aktivierung der Funktion des Umschaltens in den inaktiven Zustand oder Ruhezustand oder Referenzzustand dient.

5. Fernsteuerung (44) nach einem der vorhergehenden Ansprüche, **dadurch gekennzeichnet, dass** sie die Funktion der Auswahl einer Betriebsart der wenigstens einen Vorrichtung unter mehreren Betriebsarten oder die Funktion der Auswahl einer Vorrichtung oder einer Untermenge von Vorrichtungen unter einer Menge von Vorrichtungen und außerdem die Funktion der Regulierung eines Parameters der wenigstens einen Vorrichtung besitzt und dass sie außerdem einen Umschalter (50) umfasst, der durch den Anwender betätigbar oder aktivierbar ist, um im Voraus die Auswahlfunktion oder die Funktion des Regulierens bei der Betätigung oder Aktivierung des Elements (52) auszuwählen.

6. Fernsteuerung nach einem der vorhergehenden Ansprüche, **dadurch gekennzeichnet, dass** die eine oder die mehreren Vorrichtungen eine bzw. mehrere Lampen oder Mittel zum Erzeugen von Licht sind und dass wenigstens die Funktion der Regulierung implementiert ist und dass der regulierte Parameter die Stärke des ausgesendeten Lichts ist.

7. Fernsteuerung nach einem der vorhergehenden Ansprüche, **dadurch gekennzeichnet, dass** die eine oder die mehreren Vorrichtungen eine bzw. mehrere Jalousien oder Sonnenschutzmittel sind und dass wenigstens die Regulierungsfunktion implementiert ist und dass der regulierte Parameter die Neigung von Lamellen ist, die die eine oder die mehreren Jalousien bilden, oder die Neigung einer Stoffbahn oder eines Endabschnitts derselben ist.

8. Fernsteuerung (60) nach einem der vorhergehenden Ansprüche, **dadurch gekennzeichnet, dass** die eine oder die mehreren Vorrichtungen eine oder mehrere Verriegelungsvorrichtungen für Fahrzeugtüren sind und dass die Funktion der Auswahl einer Vorrichtung oder einer Untermenge von Vorrichtungen unter einer Menge von Verriegelungsvorrichtungen, die den jeweiligen Türen des Fahrzeugs zugeordnet sind, implementiert ist.
